# FASCICULE DE BREVET EUROPEEN

(11) **EP 2 446 136 B1**
(45) Date de publication et mention de la délivrance du brevet: **20.05.2015**
(21) Numéro de dépôt: 10745305.2
(22) Date de dépôt: 23.06.2010
(51) Int. Cl.: F02N 11/08, H02K 23/18, H02K 11/00, H02K 13/10

(54) **DISPOSITIF A BALAI POUR UNE MACHINE ELECTRIQUE TOURNANTE, NOTAMMENT UN DEMARREUR POUR MOTEUR A COMBUSTION DE VEHICULE AUTOMOBILE**
VORRICHTUNG FÜR DIE BÜRSTEN EINER ROTIERENDEN ELEKTRISCHEN MASCHINE, INSBESONDERE FÜR DEN VERBRENNUNGSMOTOR EINES KRAFTFAHRZEUGS
BRUSH DEVICE FOR A ROTATING ELECTRIC MACHINE, IN PARTICULAR A STARTER FOR THE COMBUSTION ENGINE OF A MOTOR VEHICLE

(30) Priorité: 26.06.2009 FR 0954363
(43) Date de publication de la demande: 02.05.2012
(73) Titulaire: Valeo Equipements Electriques Moteur, 94046 Créteil Cedex (FR)
(72) Inventeur: GENTIL, Maximilien, F-69003 Lyon (FR); ODIN, Laurent, F-38460 Chamagnieu (FR)
(86) Numéro de dépôt international: PCT/FR2010/051282
(87) Numéro de publication internationale: WO 2010/149932

(56) Documents cités:
- DE-A1- 3 737 603
- DE-A1- 3 741 919
- DE-A1- 10 059 680

## Description

### Domaine de l'invention

L'invention concerne un dispositif à balais pour une machine électrique tournante, notamment un démarreur pour moteur à combustion de véhicule automobile.

On connaît des démarreurs de véhicule automobile comportant une culasse, des aimants montés à l'intérieur de cette culasse, et un dispositif à balais comprenant un support sur lequel est monté un ensemble porte-balais comportant au moins une cage pourvue d'au moins un balai.

Pour assurer un bon fonctionnement électrique du démarreur, il est nécessaire d'agencer les balais et les aimants de manière à ce que leurs axes géométriques respectifs passant par un axe de rotation du démarreur soient décalés angulairement l'un par rapport à l'autre. Ce décalage angulaire est généralement appelé angle de commutation du démarreur.

La valeur de l'angle de commutation du démarreur varie en fonction de la puissance de ce démarreur.

En outre, la valeur de l'angle de commutation du démarreur varie en fonction du sens de rotation du moteur à combustion. En effet, le sens dans lequel le décalage angulaire précité doit être effectué est modifié en fonction du sens de rotation du moteur à combustion.

### Etat de la technique

Ainsi, les démarreurs connus comportent un dispositif à balai agencé pour réaliser un unique angle de commutation, cet angle étant fonction notamment d'un couple associé à la puissance de la machine et au sens de rotation du moteur à combustion. Ceci est, par exemple, décrit dans les documents FR2817678 et US4823037.

### Objet de l'invention

L'invention vise à proposer un nouveau dispositif à balais.

L'invention a ainsi pour objet un dispositif à balais pour une machine électrique tournante à aimants, selon la revendication 1, notamment un démarreur pour moteur à combustion de véhicule automobile, ce dispositif comportant des moyens pour adapter un angle de commutation de la machine électrique tournante, cet angle de commutation correspondant à un décalage angulaire entre un axe géométrique d'un balai du dispositif et un axe géométrique d'un aimant de la machine électrique tournante associé à ce balai, ces axes géométriques passant par un axe de rotation de la machine électrique tournante.

Chaque balai est associé à au moins un aimant, et chaque aimant est associé à au moins un balai.

Les moyens sont aptes à sélectionner un angle de commutation parmi plusieurs angles de commutation prédéterminés.

L'angle de commutation peut varier en fonction d'une puissance de la machine électrique tournante.

L'angle de commutation peut varier en fonction du sens de rotation du moteur à combustion.

Autrement dit, il est possible grâce à l'invention d'avoir un dispositif à balais qui permet de sélectionner l'angle de commutation dont la machine électrique tournante a besoin, en fonction de l'un au moins de la puissance de la machine électrique tournante et du sens de rotation du moteur à combustion de véhicule automobile.

Les moyens peuvent également être agencés pour bloquer en rotation ledit dispositif par rapport à une culasse de la machine électrique tournante.

Selon un exemple de mise en oeuvre de l'invention, le dispositif comporte:
- au moins un balai agencé pour venir frotter sur un collecteur de la machine électrique tournante lors du fonctionnement de celle-ci,
- un ensemble porte-balais comprenant au moins une cage agencée pour recevoir le balai,
- un support sur lequel l'ensemble porte-balais est monté.

De préférence, les moyens peuvent être réalisés sur le support.

Selon un exemple de mise en oeuvre de l'invention, les moyens peuvent être formés d'une part, par au moins une encoche agencée sur le support et capable de recevoir un ergot d'une culasse de la machine électrique tournante, et d'autre part, par un agencement de l'ensemble porte-balais sur le support réalisé de manière à ce que l'axe géométrique d'au moins un balai soit décalé angulairement d'une valeur prédéterminée par rapport à l'axe géométrique de ladite au moins une encoche, ces axes géométriques passant par l'axe de rotation de la machine électrique tournante.

Cette valeur prédéterminée de décalage angulaire correspond à la valeur de l'angle de commutation, par exemple comprise entre environ 2° et environ 20°.

Selon un autre exemple de mise en oeuvre de l'invention, les moyens peuvent également être formés d'une part, par au moins une autre encoche agencée sur le support et capable de recevoir l'ergot de la culasse de la machine électrique tournante, et d'autre part, par au moins un autre agencement de l'ensemble porte-balais sur le support réalisé de manière à ce que l'axe géométrique d'au moins un balai soit décalé angulairement d'au moins une autre valeur prédéterminée par rapport à l'axe géométrique de ladite au moins une autre encoche, ces axes géométriques passant par l'axe de rotation de la machine électrique tournante.

Autrement dit, le dispositif à balais permet d'adapter l'angle de commutation de la machine à plusieurs valeurs prédéterminées.

Par exemple, il est possible de sélectionner une valeur d'angle de commutation parmi au moins deux, trois ou quatre valeurs différentes prédéterminées.

Le dispositif à balais selon l'invention peut donc être avantageusement standard et adaptable à plusieurs machines électriques tournantes.

Selon encore un autre exemple de mise en oeuvre de l'invention, le support et l'ensemble porte-balais peuvent être agencés de manière à ce que l'ensemble porte-balais puisse être disposé sensiblement de part et d'autre du support pour que, après retournement du support par rapport à un axe perpendiculaire à l'axe de rotation de la machine électrique tournante, l'angle de commutation puisse être adapté au sens de rotation du moteur à combustion.

Le balai peut comporter plusieurs couches de matière, notamment deux couches agencées parallèlement sur la longueur du balai suivant une direction radiale par rapport à l'axe de rotation de la machine électrique tournante. Dans ce cas, lorsque le dispositif à balais adapte l'angle de commutation en fonction du sens de rotation du moteur à combustion, le balai multi-couches reste correctement agencé dans l'ensemble porte-balai pour un bon fonctionnement électrique de la machine. Il est donc avantageusement possible d'avoir un balai multi-couches standard.

L'invention a également pour objet une machine électrique tournante à aimants, notamment démarreur pour moteur à combustion de véhicule automobile, comportant un dispositif à balais tel que décrit ci-dessus.

Selon un exemple de mise en oeuvre de l'invention, la machine peut comporter une culasse pourvue d'au moins un ergot apte à s'engager dans une encoche du dispositif à balais, notamment pour bloquer en rotation ce dispositif par rapport à cette culasse.

L'ergot peut s'étendre suivant un axe parallèle à l'axe de rotation de la machine à partir d'un bord de la culasse.

En variante, l'ergot peut s'étendre suivant un axe perpendiculaire à l'axe de rotation de la machine à partir d'une surface circonférentielle intérieure de la culasse vers l'intérieur de cette culasse.

L'ergot peut par exemple présenter une forme sensiblement rectangulaire.

Dans le cas de machine de grande puissance, la culasse peut être réalisée à partir d'une pièce métallique usinée et l'ergot peut être réalisée également par usinage de cette pièce, et le cas échéant, l'ergot peut présenter une forme par exemple rectangulaire avec des bords sensiblement droits.

Dans le cas de machine de petite puissance, la culasse peut être réalisée à partir d'une pièce métallique roulée et l'ergot peut être réalisée par découpe de cette pièce, et le cas échéant, l'ergot peut présenter des bords ayant subis une déformation.

Ainsi, lorsque le dispositif à balais est apte à s'adapter d'une part, à un angle de commutation prédéterminé, grâce notamment à au moins une encoche agencée sur le support du dispositif et capable de recevoir un ergot présentant des bords droits et non déformés, et d'autre part, à un autre angle de commutation prédéterminé, grâce notamment à au moins une autre encoche agencée sur le support du dispositif et capable de recevoir un ergot présentant des bords déformés et non droits, les dites encoches permettent de former un détrompeur lors de la sélection de l'angle de commutation en fonction de la puissance de la machine électrique tournante.

De préférence, la culasse peut comporter au moins un aimant monté à l'intérieur de celle-ci, cet aimant étant fixé à la culasse par des moyens de fixation de manière à ce que l'axe géométrique de l'aimant soit décalé angulairement d'une valeur prédéterminée par rapport à l'axe géométrique de l'ergot de la culasse, ces axes géométriques passant par l'axe de rotation de la machine électrique tournante.

Selon un exemple de mise en oeuvre de l'invention, les moyens de fixation des aimants dans la culasse peuvent être formés par au moins un trou agencé dans la culasse et un organe de fixation, notamment une vis, capable de traverser le trou pour fixer l'aimant à l'intérieur de la culasse, notamment contre une surface circonférentielle intérieure de la culasse.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, un démarreur conforme à un exemple de mise en oeuvre de l'invention,
- les figures 2 et 2a représentent, schématiquement et partiellement, en perspective et en coupe, une culasse du démarreur de la figure 1,
- la figure 3 représente, schématiquement et partiellement, en coupe, une variante de réalisation de la culasse du démarreur de la figure 1,
- les figures 4 à 7 représentent, schématiquement et partiellement, un dispositif à balais conforme à quatre exemples de mise en oeuvre de l'invention, pour équiper le démarreur de la figure 1, et
- les figures 8 et 9 illustrent, schématiquement et partiellement, le dispositif à balais des figures 4 à 7 partiellement assemblé avec la culasse de la figure 2,

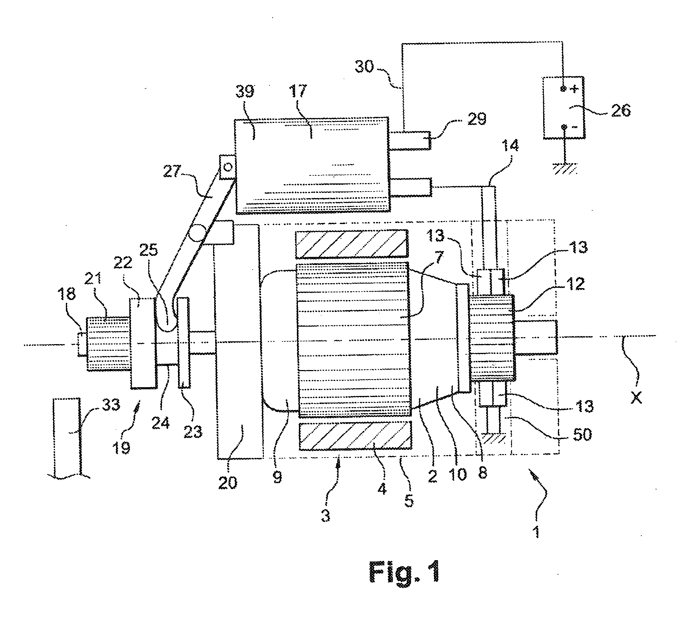

On a représenté sur la figure 1 un démarreur 1 pour moteur à combustion interne de véhicule automobile.

Ce démarreur 1 comprend, d'une part, un rotor 2, encore appelé induit, pouvant tourner autour d'un axe X, et d'autre part, un stator 3, encore appelé inducteur, autour du rotor 2.

Ce stator 3 comporte une culasse 5 sur laquelle sont fixés un ou plusieurs aimants 4, notamment de type permanent.

Le rotor 2 comporte un corps de rotor 7, et un bobinage d'induit 8 enroulé dans des encoches du corps de rotor 7.

Ce bobinage d'induit 8 forme, de part et d'autre du corps de rotor 7, un chignon avant 9 et un chignon arrière 10.

Le rotor 2 est pourvu, à l'arrière, d'un collecteur 12 comprenant une pluralité de pièces de contact connectées électriquement aux éléments conducteurs, formés dans l'exemple considéré par des fils du bobinage d'induit 8.

Un groupe de balais 13 d'un dispositif à balais 50, représenté très schématiquement sur la figure 1, est prévu pour l'alimentation électrique du bobinage d'induit 8, l'un au moins des balais 13 étant relié à la masse du démarreur 1 et un autre au moins des balais 13 étant relié à un contacteur 17 via une connection électrique, notamment un ou plusieurs fils 14.

Les balais 13 viennent frotter sur le collecteur 12 lorsque le rotor 2 est en rotation.

Les balais 13 sont réalisés par exemple à base de carbone.

Le dispositif à balais 50 sera décrit plus en détail ci-dessous.

Le démarreur 1 comporte en outre un lanceur 19 monté de manière coulissante sur un arbre d'entraînement 18 et pouvant être entraîné en rotation autour de l'axe X par le rotor 2.

Un ensemble réducteur de vitesses 20 peut être interposé entre le rotor 2 et l'arbre d'entraînement 18, de manière connue en soi.

Le lanceur 19 comporte un élément d'entraînement formé par un pignon 21 et destiné à s'engager sur un organe d'entraînement 33 du moteur à combustion. Cet organe d'entraînement est par exemple une couronne dentée.

Le lanceur 19 comprend en outre une roue libre 22 et une rondelle poulie 23 définissant entre elles une gorge 24 pour recevoir l'extrémité 25 d'une fourchette 27.

Cette fourchette 27 est réalisée par exemple par moulage d'une matière plastique.

La fourchette 27 est actionnée par le contacteur 17 pour déplacer le lanceur 19 par rapport à l'arbre d'entraînement 18, suivant l'axe X, entre une première position dans laquelle le lanceur 19 entraîne le moteur à combustion par l'intermédiaire du pignon 21, et une deuxième position dans laquelle le lanceur 19 est désengagé de la couronne dentée 33.

Le contacteur 17 comprend une borne 29 reliée via un élément de liaison électrique, notamment un fil 30, à une alimentation électrique du véhicule telle qu'une batterie 26.

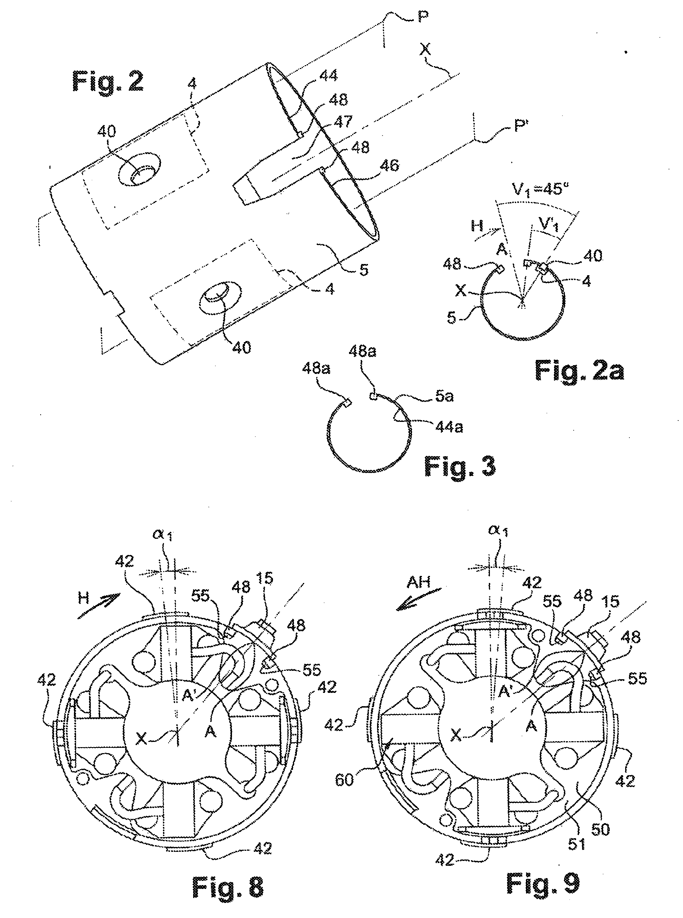

On va maintenant décrire plus en détails, en référence notamment aux figures 2, 2a et 3, la culasse 5 du démarreur 1.

Comme on peut le voir sur la figure 2, la culasse 5 comporte des trous 40 traversés par des vis de fixation 42 (représentées sur les figures 8 et 9) pour fixer les aimants 4 (représentés en pointillés sur la figure 2).

Dans l'exemple décrit, la culasse 5 comporte quatre aimants 4 et quatre vis 42 associées chacune à un aimant 4 pour sa fixation sur une surface circonférentielle intérieure 44 de la culasse 5.

Chaque vis 42 fixe l'aimant 4 en son milieu à la culasse 5 de manière à ce que les plans P et P' passant respectivement par le centre respectif de chaque trou 40 passent également par le milieu respectif de chaque aimant 4 associé.

Les plans P et P' comportent en outre l'axe X.

Les trous 40 sont régulièrement répartis sur la circonférence de la culasse 5 de manière à fixer les aimants associés 13 avec une répartition régulière dans la culasse 5.

La culasse 5 comporte en outre un orifice 47, et deux ergots 48 disposés sur un bord 46 de la culasse 5, de part et d'autre de l'orifice 47.

Ces ergots 48 sont agencés à égale distance d'un point A situé sur la circonférence de la culasse, au centre de l'orifice 47.

En variante, la culasse peut ne comporter qu'un seul ergot.

Comme visible à la figure 2a, les axes géométriques, passant par l'axe X, de l'aimant 13 et du trou 40 associé qui suivent circonférentiellement le point A, dans le sens horaire H, sont décalés angulairement d'une valeur prédéterminée V1 par rapport à un axe perpendiculaire à l'axe X passant par ce point A.

Par exemple, cette valeur prédéterminée V1 est égale à 45°.

Cette valeur V1 est fonction du nombre d'aimants 4 et de la répartition des aimants 13 dans la culasse 5.

Autrement dit, les axes géométriques, passant par l'axe X, de l'aimant 4 et du trou 40 associé sont décalés angulairement d'une valeur prédéterminée V'1 par rapport à l'axe géométrique passant par l'axe X de l'ergot 48 qui suit circonférentiellement le point A dans le sens H.

Cette valeur V'1 est fonction de la valeur V1 et de la distance entre le point A et cet ergot 48.

On peut déduire que les axes géométriques, passant par l'axe X, de l'aimant 4 et du trou 40 associé qui précèdent circonférentiellement le point A, dans le sens H, sont décalés angulairement des mêmes valeurs prédéterminées V1 et V'1 respectivement, par rapport à l'axe perpendiculaire à l'axe X et passant par ce point A, et par rapport à l'axe géométrique passant par l'axe X de l'ergot 48 qui précède le point A dans le sens H.

L'orifice 47 est agencé pour permettre en outre le passage de la connection électrique 14 pour l'alimentation électrique des balais 13, cette connection 14 étant agencé avec un organe d'étanchéité 15 (représenté aux figures 8 et 9).

Les ergots 48 présentent une forme sensiblement rectangulaire s'étendant parallèlement à l'axe X à partir du bord 46 de la culasse 5.

Pour des démarreurs de grande puissance, la culasse 5 et ses ergots 48 peuvent être réalisés par usinage, et le cas échéant, les ergots 48 présentent une forme rectangulaire avec des bords sensiblement droits.

Pour des démarreurs de petite puissance, la culasse 5 et ses ergots 48 peuvent être réalisés respectivement par roulage et découpage, et le cas échéant, les bords des ergots 48 sont sensiblement déformés, et les ergots 48 présentent une forme sensiblement trapézoïdale.

En variante, comme visible à la figure 3, le démarreur peut comporter une culasse 5a avec deux ergots 48a s'étendant suivant un axe perpendiculaire à l'axe X, à partir d'une surface circonférentielle intérieure 44 de cette culasse 5a vers l'intérieur de celle-ci.

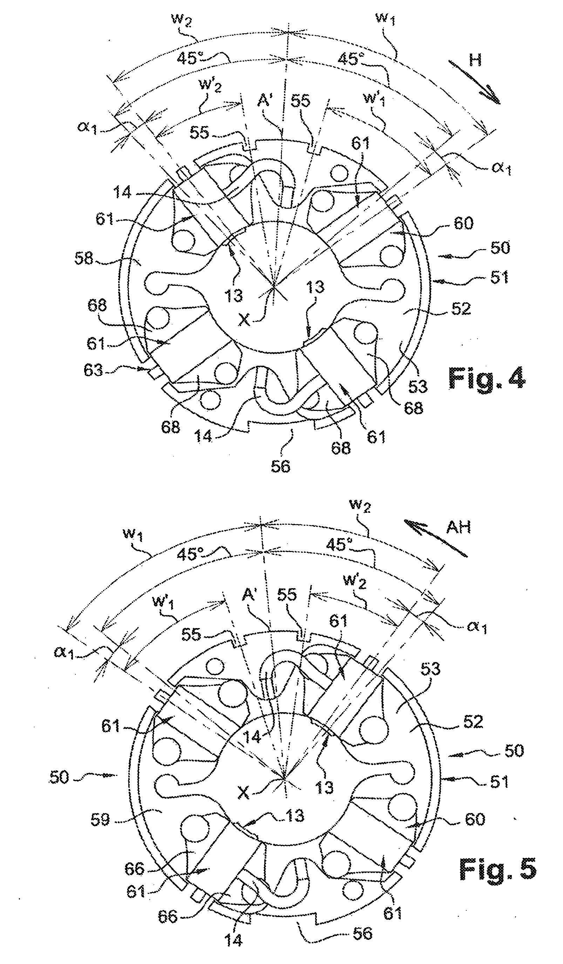

On va maintenant décrire plus en détails, en référence aux figures 4 à 9, le dispositif à balais 50.

Ce dispositif 50 comporte un support 51 pourvu d'une plaque électriquement conductrice 52, par exemple réalisé en acier, et présentant une forme annulaire perpendiculaire à l'axe X.

La plaque 52 comporte quatre ensembles porte-balais 60 montés sur une face 58 du support 51.

Chaque ensemble porte-balais 60 comporte une cage 61 agencée pour recevoir un balai 13.

Ainsi le dispositif à balais 50 comprend quatre ensembles porte-balais 60 portant chacun un balai 13.

Deux des ensembles 60 sont montés sur le support 51 à l'aide d'inserts isolants (non représentés), les balais 13 de ces ensembles 60 étant alors reliés à une alimentation électrique par les fils 14, et les deux autres ensembles 60 sont fixés directement sur la plaque conductrice 52, les balais 13 de ces ensembles 60 étant alors, dans cet exemple, mis à la masse.

Pour cela, chaque ensemble porte-balais 60 comporte deux oreilles 68 à fixer, notamment par rivetage, sur le support 51.

En variante, chaque ensemble porte-balais peut comporter deux cages agencées chacune pour recevoir un balai, ces cages étant notamment disposées de part et d'autre de la plaque conductrice.

Ainsi le dispositif à balais peut comprendre quatre ensembles porte-balais portant chacun une paire de balais.

Dans ce cas, deux des ensembles peuvent être montés sur le support à l'aide d'inserts isolants, les balais de ces ensembles étant alors reliés à une alimentation électrique, et les deux autres ensembles peuvent être fixés directement sur la plaque conductrice, les balais de ces ensembles étant alors, dans cet exemple, mis à la masse.

Les cages peuvent être solidaires l'une de l'autre, ce qui permet de faciliter le montage de l'ensemble soit sur l'insert isolant soit sur la plaque conductrice.

Les deux cages peuvent être reliées entre elles par exemple par une charnière frontale.

En variante, les deux cages peuvent être disposées d'un même côté du support.

Les deux cages peuvent définir des compartiments séparés pour les balais, ou en variante, l'ensemble porte-balais peut présenter initialement un logement commun pour deux balais à mettre en place, puis après montage de l'ensemble sur le support, les balais peuvent être séparés l'un de l'autre par ce support.

Dans l'exemple décrit en référence aux figures 4 à 9, chaque ensemble porte-balais 60 est réalisé d'un seul tenant, notamment par découpe et pliage d'une tôle en acier.

Chaque cage 61 comprend des parois choisies pour épouser sensiblement la forme du balai 13 correspondant.

Les cages 61 sont ouvertes aux deux extrémités radiales.

Un ressort 63 est placé dans le fond de chaque cage 61 contre un obturateur (non représenté).

Ce ressort 63 sert à exercer sur le balai 13 associé, une force tendant à l'appliquer contre le collecteur 12 du démarreur.

Chaque balai 13 est associé électriquement à un aimant 4 fixé dans la culasse 5.

Comme visible à la figure 4, le support 51 comporte deux encoches 55 agencées à égale distance d'un point A' situé sur la circonférence extérieure du support 51.

Ces deux encoches 55 sont agencées pour recevoir les ergots 48 de la culasse 5 de manière à immobiliser en rotation, autrement dit à indexer, le support 51, les ensembles porte-balais 60 et les balais 13 par rapport à cette culasse 5.

L'ensemble porte-balais 60 suivant circonférentiellement les encoches 55, dans le sens H, est agencé sur le support 51 de manière à ce que l'axe géométrique, passant par l'axe X, du balai associé 13 soit décalé angulairement d'une valeur prédéterminée W1 par rapport à l'axe passant par l'axe X et par le point A'.

Par exemple, cette valeur prédéterminée W1 est égale à 45° à laquelle on ajoute un angle α1 compris entre environ 2° et environ 20°, α1 correspondant à un angle de commutation du démarreur 1.

Autrement dit, l'ensemble porte-balais 60 suivant circonférentiellement les encoches 55, dans le sens H, est agencé sur le support 51 de manière à ce que l'axe géométrique, passant par l'axe X, du balai associé 13 soit décalé angulairement d'une valeur prédéterminée W'1 par rapport à l'axe géométrique, passant par l'axe X, de l'encoche 55 qui suit circonférentiellement le point A' dans le sens H.

Cette valeur W'1 est fonction de la valeur W1 et de la distance entre le point A' et cette encoche 55.

Comme visible également à la figure 4, on peut déduire que l'ensemble porte-balais 60 précédant circonférentiellement les encoches 55, dans le sens H, est agencé sur le support 51 de manière à ce que l'axe géométrique, passant par l'axe X, du balai associé 13 soit décalé angulairement d'une valeur prédéterminée W2 par rapport à l'axe passant par l'axe X et par le point A'.

Par exemple, cette valeur prédéterminée W2 est égale à 45° à laquelle on retranche l'angle α1.

On peut en outre en déduire que l'ensemble porte-balais 60 précédant circonférentiellement les encoches 55, dans le sens H, est agencé sur le support 51 de manière à ce que l'axe géométrique, passant par l'axe X, du balai associé 13 soit décalé angulairement d'une valeur prédéterminée W'2 par rapport à l'axe géométrique, passant par l'axe X, de l'encoche 55 qui précède le point A dans le sens H.

Cette valeur W'2 est fonction de la valeur W2 et de la distance entre le point A et cette encoche 55.

Les axes passant par l'axe X et respectivement par les points A et A' sont confondus.

Ainsi, comme visible aux figures 4 et 8, un angle de commutation α correspondant à un décalage angulaire entre l'axe géométrique de chaque balai 13 et l'axe géométrique de chaque aimant 4 associé à ce balai 13, ces axes géométriques passant par l'axe X, est crée.

Dans l'exemple de mise en oeuvre de l'invention illustré à la figure 4, l'angle de commutation α1 est adapté à un sens de rotation, notamment horaire H, du moteur à combustion.

La figure 5 illustre le support 51 de la figure 4, après retournement de ce support 51 par rapport à un axe perpendiculaire à l'axe X.

Dans l'exemple décrit, les ensembles porte-balais 60 sont agencés de manière à pouvoir être disposé de part et d'autre du support 51, notamment ici sur une face 59 du support 51, opposée à la face 58 de ce support 51.

Les décalages angulaires indiqués en référence à la figure 4 entre l'axe géométrique, passant par l'axe X, du balai 13, et, l'axe passant par l'axe X et par le point A' ou l'axe géométrique, passant par l'axe X, de l'encoche 55 sont donc inversés, comme cela est visible aux figures 8 et 9.

Ainsi, comme visible aux figures 5 et 9, l'angle de commutation est adapté à un sens de rotation inversé, notamment anti-horaire AH, du moteur à combustion par rapport à l'exemple de la figure 4.

Cet angle de commutation correspond à la valeur négative de α1.

Grâce à l'invention, il est possible d'adapter l'angle de commutation α1 du démarreur 1 en fonction du sens de rotation, horaire H ou anti-horaire Ah, du moteur à combustion.

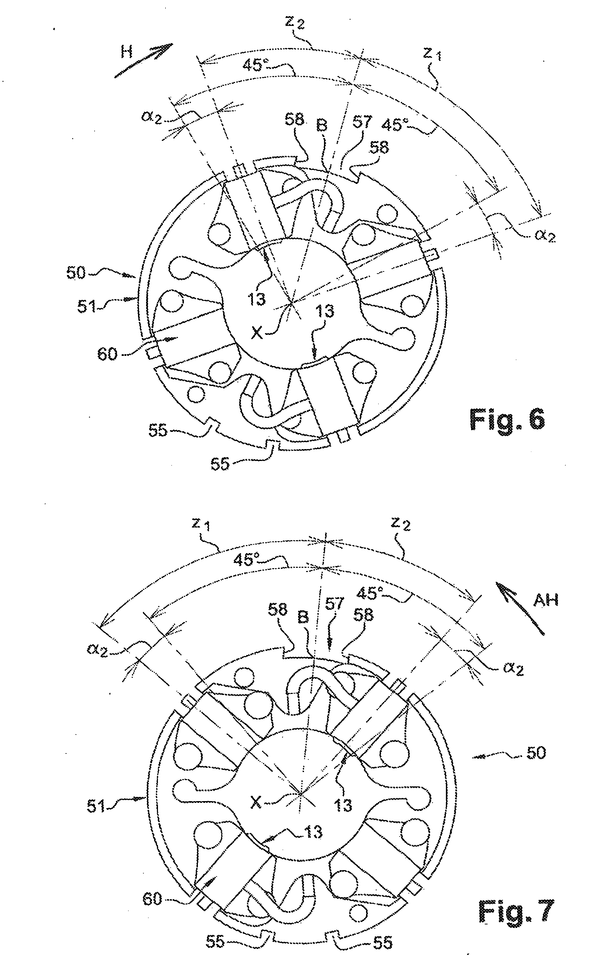

La figure 6 illustre le support 51 de la figure 4, après rotation de ce support 51 par rapport à l'axe X d'un angle d'environ 180°.

Comme visible à la figure 6, le support 51 comporte également une autre encoche 57 agencée sur la circonférence extérieure du support 51.

Cette encoche 57 présente un axe géométrique passant par l'axe X et par un point B situé en son centre.

L'encoche 57 est en outre agencée pour recevoir contre ses bords circonférentiels 58 les ergots 48 de la culasse 5 de manière à immobiliser en rotation, autrement dit à indexer, le support 51, les ensembles porte-balais 60 et les balais 13 par rapport à cette culasse 5.

L'ensemble porte-balais 60 suivant circonférentiellement l'encoche 57, dans le sens H, est agencé sur le support 51 de manière à ce que l'axe géométrique, passant par l'axe X, du balai associé 13 soit décalé angulairement d'une valeur prédéterminée Z1 par rapport à l'axe géométrique, passant par l'axe X et par le point B, de l'encoche 57.

Par exemple, cette valeur prédéterminée Z1 est égale à 45° à laquelle on ajoute un angle α2 compris entre environ 2° et environ 20°, α2 correspondant à un autre angle de commutation du démarreur 1, différent de α1.

Par exemple, α2 est supérieur à α1, ce qui signifie que l'angle de commutation α2 est adapté à un démarreur de plus grande puissance que celle d'un démarreur pour lequel l'angle de commutation α1 est adapté.

Comme visible également à la figure 6, on peut déduire que l'ensemble porte-balais 60 précédant circonférentiellement l'encoche 57, dans le sens H, est agencé sur le support 51 de manière à ce que l'axe géométrique, passant par l'axe X, du balai associé 13 soit décalé angulairement d'une valeur prédéterminée Z2 par rapport à l'axe géométrique, passant par l'axe X et par le point B, de l'encoche 57.

Par exemple, cette valeur prédéterminée Z2 est égale à 45° à laquelle on retranche l'angle α2.

Les axes passant par l'axe X et respectivement par les points A et B sont confondus.

Ainsi, un autre angle de commutation α correspondant à un décalage angulaire entre l'axe géométrique de chaque balai 13 et l'axe géométrique de chaque aimant 4 associé à ce balai 13, ces axes géométriques passant par l'axe X, est crée.

Grâce à l'invention, il est possible de sélectionner par le biais du dispositif 50 un angle de commutation α du démarreur parmi plusieurs angles de commutation prédéterminés α1 et α2, ceux-ci étant fonction de la puissance du démarreur 1.

Il est donc possible d'avoir un dispositif à balais 50 standard et adaptable à plusieurs démarreurs.

La figure 7 illustre le support 51 de la figure 6, après retournement de ce support 51 par rapport à l'axe perpendiculaire à l'axe X, en analogie avec les figures 4 et 5.

Dans l'exemple décrit, les ensembles porte-balais 60 sont agencés de manière à pouvoir être disposé de part et d'autre du support 51, notamment ici sur la face 59 du support 51, opposée à la face 58 de ce support 51.

Les décalages angulaires indiqués en référence à la figure 6 entre l'axe géométrique, passant par l'axe X, du balai 13 et l'axe géométrique, passant par l'axe X et par le point B, de l'encoche 57 sont donc inversés.

Ainsi, l'angle de commutation est adapté à un sens de rotation inversé, notamment anti-horaire AH, du moteur à combustion par rapport à l'exemple de la figure 6.

Cet angle de commutation correspond à la valeur négative de α2.

Grâce à l'invention, il est ainsi possible d'adapter l'angle de commutation α2 du démarreur 1 en fonction du sens de rotation, horaire H ou anti-horaire Ah, du moteur à combustion.

L'invention permet au dispositif à balais 50 de s'adapter à plusieurs démarreurs, en fonction notamment de leur puissance et du sens de rotation du moteur à combustion, grâce à une sélection de l'angle de commutation α du démarreur 1, parmi plusieurs valeurs prédéterminées de cet angle.

L'invention n'est pas limitée aux exemples de mise en oeuvre qui viennent d'être décrits.

En effet, le dispositif 50 peut comporter une seule encoche 55 adaptée à l'angle α1, ainsi que l'encoche 57 adaptée à l'angle α2, et le cas échéant, la culasse 5 peut ne comporter qu'un seul ergot 48.

En variante, le dispositif 50 peut comporter une seule encoche 55 adaptée à l'angle α1, ainsi que deux encoches 57 adaptées à l'angle α2, et le cas échéant, la culasse 5 peut comporter deux ergots 48.

En variante encore, le dispositif 50 peut comporter deux encoches 55 adaptées à l'angle α1, ainsi que deux encoches 57 adaptées à l'angle α2, et le cas échéant, la culasse 5 peut comporter deux ergots 48.

Le dispositif 50 peut également comporter d'autres encoches réparties sur le support 51, ces encoches étant associées à d'autres agencements d'ensembles porte-balais de manière à créer d'autres angles de commutation, pour permettre au dispositif 50 de s'adapter notamment à d'autres puissances de démarreurs, par la sélection de ces autres angles de commutation prédéterminés.

Grâce à l'invention, le dispositif à balais 50 adapte l'angle de commutation au démarreur.

## Revendications

1. Dispositif à balais (50) pour une machine électrique tournante à aimants (4), notamment un démarreur (1) pour moteur à combustion de véhicule automobile, ce dispositif (50) comportant des moyens pour adapter un angle de commutation (α) de la machine électrique tournante, cet angle de commutation (α) correspondant à un décalage angulaire entre un axe géométrique d'un balai (13) du dispositif (50) et un axe géométrique d'un aimant (4) de la machine électrique tournante associé à ce balai (13), ces axes géométriques passant par un axe de rotation (X) de la machine électrique tournante et dans lequel les moyens pour adapter l'angle de commutation (α) sont aptes à sélectionner un angle de commutation (α) parmi plusieurs angles de commutation prédéterminés (α1, α2), les moyens étant agencés pour bloquer en rotation ledit dispositif (50) par rapport à une culasse (5) de la machine électrique tournante.

2. Dispositif (50) selon la revendication précédente, **caractérisé par le fait que** les moyens sont aptes à adapter l'angle de commutation (α) en fonction d'une puissance de la machine électrique tournante.

3. Dispositif (50) selon l'une des revendications précédentes, **caractérisé par le fait que** les moyens sont aptes à adapter l'angle de commutation (α) en fonction du sens de rotation (H, AH) du moteur à combustion.

4. Dispositif (50) selon l'une des revendications précédentes, **caractérisé par le fait qu'**il comporte:
- au moins un balai (13) agencé pour venir frotter sur un collecteur (12) de la machine électrique tournante lors du fonctionnement de celle-ci
- un ensemble porte-balais (60) comprenant au moins une cage (61) agencée pour recevoir le balai (13),
- un support (51) sur lequel l'ensemble porte-balais (60) est monté.

5. Dispositif (50) selon la revendication précédente, **caractérisé par le fait que** les moyens sont réalisés sur le support (51).

6. Dispositif (50) selon la revendication précédente, **caractérisé par le fait que** les moyens sont formés d'une part, par au moins une encoche (55) agencée sur le support (51) et capable de recevoir un ergot (48) d'une culasse (5) de la machine électrique tournante, et d'autre part, par un agencement de l'ensemble porte-balais (60) sur le support (51) réalisé de manière à ce que l'axe géométrique d'au moins un balai (13) soit décalé angulairement d'une valeur prédéterminée (α1) par rapport à l'axe géométrique de ladite au moins une encoche (55), ces axes géométriques passant par l'axe de rotation (X) de la machine électrique tournante.

7. Dispositif (50) selon la revendication précédente, **caractérisé par le fait que** les moyens sont également formés d'une part, par au moins une autre encoche (57) agencée sur le support (51) et capable de recevoir l'ergot (48) de la culasse (5) de la machine électrique tournante, et d'autre part, par au moins un autre agencement de l'ensemble porte-balais (60) sur le support (51) réalisé de manière à ce que l'axe géométrique d'au moins un balai (13) soit décalé angulairement d'au moins une autre valeur prédéterminée (α2) par rapport à l'axe géométrique de ladite au moins une autre encoche (57), ces axes géométriques passant par l'axe de rotation (X) de la machine électrique tournante.

8. Dispositif (50) selon l'une des revendications 6 à 7 et selon la revendication 4, **caractérisé par le fait que** le support (51) et l'ensemble porte-balais (60) sont agencés de manière à ce que l'ensemble porte-balais (60) puisse être disposé sensiblement de part et d'autre du support (51) pour que, après retournement du support (51) par rapport à un axe perpendiculaire à l'axe de rotation (X) de la machine électrique tournante, l'angle de commutation s'adapte au sens de rotation (H, AH) du moteur à combustion.

9. Machine électrique tournante à aimants, notamment démarreur pour moteur à combustion de véhicule automobile, comportant un dispositif à balais (50) selon l'une quelconque des revendications précédentes.

10. Machine selon la revendication précédente, **caractérisée par le fait qu'**elle comporte une culasse (5) pourvue d'au moins un ergot (48) apte à s'engager dans une encoche (55, 57) du dispositif à balais (50), notamment pour bloquer en rotation ce dispositif (50) par rapport à cette culasse (5).

11. Machine selon la revendication précédente, **caractérisée par le fait que** la culasse (5) comporte au moins un aimant (4) monté à l'intérieur de celle-ci, cet aimant (4) étant fixé à la culasse (5) par des moyens de fixation de manière à ce que l'axe géométrique de l'aimant (4) soit décalé angulairement d'une valeur prédéterminée par rapport à l'axe géométrique de l'ergot (48) de la culasse (5), ces axes géométriques passant par l'axe de rotation (X) de la machine.

12. Machine selon la revendication précédente, **caractérisée par le fait que** les moyens de fixation des aimants dans la culasse sont formés par au moins un trou (40) agencé dans la culasse et un organe de fixation (42), notamment une vis, capable de traverser le trou pour fixer l'aimant (4) à l'intérieur de la culasse (5).

## Patentansprüche

1. Bürstenvorrichtung (50) für eine drehende elektrische Maschine mit Magneten (4), insbesondere einen Anlasser (1) für einen Verbrennungsmotor eines Kraftfahrzeugs, wobei diese Vorrichtung (50) Einrichtungen zur Einstellung eines Schaltwinkels (α) der drehenden elektrischen Maschine aufweist, wobei dieser Schaltwinkel (α) einem Winkelversatz zwischen einer geometrischen Achse einer Bürste (13) der Vorrichtung (50) und einer geometrischen Achse eines dieser Bürste (13) zugeordneten Magnets (4) der drehenden elektrischen Maschine entspricht, wobei diese geometrischen Achsen durch eine Drehachse (X) der drehenden elektrischen Maschine verlaufen, und wobei die Einrichtungen zur Einstellung des Schaltwinkels (α) einen Schaltwinkel (α) unter mehreren vorbestimmten Schaltwinkeln (α1, α2) auswählen können, wobei die Einrichtungen ausgebildet sind, um die Drehung der Vorrichtung (50) bezüglich eines Jochs (5) der drehenden elektrischen Maschine zu blockieren.

2. Vorrichtung (50) nach dem vorhergehenden Anspruch, **dadurch gekennzeichnet, dass** die Einrichtungen den Schaltwinkel (α) abhängig von einer Leistung der drehenden elektrischen Maschine einstellen können.

3. Vorrichtung (50) nach einem der vorhergehenden Ansprüche, **dadurch gekennzeichnet, dass** die Einrichtungen den Schaltwinkel (α) abhängig von der Drehrichtung (H, AH) des Verbrennungsmotors einstellen können.

4. Vorrichtung (50) nach einem der vorhergehenden Ansprüche, **dadurch gekennzeichnet, dass** sie aufweist:
- mindestens eine Bürste (13), die ausgebildet ist, um auf einem Kollektor (12) der drehenden elektrischen Maschine bei deren Betrieb zu reiben,
- eine Bürstenträgereinheit (60), die mindestens einen Käfig (61) enthält, der ausgebildet ist, um die Bürste (13) aufzunehmen,
- einen Träger (51), auf den die Bürstenträgereinheit (60) montiert ist.

5. Vorrichtung (50) nach dem vorhergehenden Anspruch, **dadurch gekennzeichnet, dass** die Einrichtungen auf dem Träger (51) ausgeführt sind.

6. Vorrichtung (50) nach dem vorhergehenden Anspruch, **dadurch gekennzeichnet, dass** die Einrichtungen einerseits von mindestens eine Kerbe (55), die auf dem Träger (51) ausgebildet und fähig ist, einen Zapfen (48) eines Jochs (5) der drehenden elektrischen Maschine aufzunehmen, und andererseits von einer Anordnung der Bürstenträgereinheit (60) auf dem Träger (51) gebildet werden, die so ausgeführt ist, dass die geometrische Achse mindestens einer Bürste (13) um einen vorbestimmten Wert (α1) bezüglich der geometrischen Achse der mindestens einen Kerbe (55) winkelversetzt ist, wobei diese geometrischen Achsen durch die Drehachse (X) der drehenden elektrischen Maschine verlaufen.

7. Vorrichtung (50) nach dem vorhergehenden Anspruch, **dadurch gekennzeichnet, dass** die Einrichtungen ebenfalls einerseits von mindestens einer weiteren Kerbe (57), die auf dem Träger (51) ausgebildet und fähig ist, den Zapfen (48) des Jochs (5) der drehenden elektrischen Maschine aufzunehmen, und andererseits von mindestens einer weiteren Anordnung der Bürstenträgereinheit (60) auf dem Träger (51) gebildet werden, die so ausgeführt ist, dass die geometrische Achse mindestens einer Bürste (13) um mindestens einen anderen vorbestimmten Wert (α2) bezüglich der geometrischen Achse der mindestens einen anderen Kerbe (57) winkelversetzt ist, wobei diese geometrischen Achsen durch die Drehachse (X) der drehenden elektrischen Maschine verlaufen.

8. Vorrichtung (50) nach einem der Ansprüche 6 bis 7 und nach Anspruch 4, **dadurch gekennzeichnet, dass** der Träger (51) und die Bürstenträgereinheit (60) so ausgebildet sind, dass die Bürstenträgereinheit (60) im Wesentlichen zu beiden Seiten des Trägers (51) angeordnet werden kann, damit nach dem Umdrehen des Trägers (51) bezüglich einer Achse lotrecht zur Drehachse (X) der drehenden elektrischen Maschine der Schaltwinkel sich an die Drehrichtung (H, AH) des Verbrennungsmotors anpasst.

9. Drehende elektrische Maschine mit Magneten, insbesondere Anlasser für einen Verbrennungsmotor eines Kraftfahrzeugs, die eine Bürstenvorrichtung (50) nach einem der vorhergehenden Ansprüche aufweist.

10. Maschine nach dem vorhergehenden Anspruch, **dadurch gekennzeichnet, dass** sie ein Joch (5) aufweist, das mit mindestens einem Zapfen (48) versehen ist, der sich in eine Kerbe (55, 57) der Bürstenvorrichtung (50) einfügen kann, insbesondere, um diese Vorrichtung (50) bezüglich dieses Jochs (5) in Drehung zu blockieren.

11. Maschine nach dem vorhergehenden Anspruch, **dadurch gekennzeichnet, dass** das Joch (5) mindestens einen Magnet (4) aufweist, der in seinem Inneren montiert ist, wobei dieser Magnet (4) am Joch (5) so durch Befestigungseinrichtungen befestigt ist, dass die geometrische Achse des Magnets (4) um einen vorbestimmten Wert bezüglich der geometrischen Achse des Zapfens (48) des Jochs (5) winkelversetzt ist, wobei diese geometrischen Achsen durch die Drehachse (X) der Maschine verlaufen.

12. Maschine nach dem vorhergehenden Anspruch, **dadurch gekennzeichnet, dass** die Befestigungseinrichtungen der Magnete im Joch von mindestens einem im Joch ausgebildeten Loch (40) und einem Befestigungsorgan (42), insbesondere einer Schraube, gebildet werden, die das Loch durchqueren kann, um den Magnet (4) im Inneren des Jochs zu befestigen (5).

## Claims

1. Brush device (50) for a rotating electrical machine having magnets (4), in particular a starter (1) for a motor vehicle combustion engine, this device (50) comprising means for adapting a commutation angle (α) of the rotating electrical machine, this commutation angle (α) corresponding to an angular offset between a geometrical axis of a brush (13) of the device (50) and a geometrical axis of a magnet (4) of the rotating electrical machine associated with this brush (13), these geometrical axes passing through an axis of rotation (X) of the rotating electrical machine, and in which device the means for adapting the commutation angle (α) are able to select a commutation angle (α) from a plurality of predetermined commutation angles (α1, α2), the means being arranged to block the said device (50) in rotation with respect to a yoke (5) of the rotating electrical machine.

2. Device (50) according to the preceding claim, **characterized in that** the means are able to adapt the commutation angle (α) as a function of a power of the rotating electrical machine.

3. Device (50) according to either of the preceding claims, **characterized in that** the means are able to adapt the commutation angle (α) as a function of the direction of rotation (H, AH) of the combustion engine.

4. Device (50) according to one of the preceding claims, **characterized in that** it comprises:
- at least one brush (13) arranged to rub against a commutator (12) of the rotating electrical machine during the operation thereof,
- a brush-holder assembly (60) comprising at least one cage (61) arranged to receive the brush (13),
- a support (51) on which the brush-holder assembly (60) is mounted.

5. Device (50) according to the preceding claim, **characterized in that** the means are produced on the support (51).

6. Device (50) according to the preceding claim, **characterized in that** the means are formed, on the one hand, by at least one slot (55) arranged on the support (51) and capable of receiving a lug (48) of a yoke (5) of the rotating electrical machine, and, on the other hand, by an arrangement of the brush-holder assembly (60) on the support (51) produced in such a way that the geometrical axis of at least one brush (13) is offset angularly by a predetermined value (α1) with respect to the geometrical axis of the said at least one slot (55), these geometrical axes passing through the axis of rotation (X) of the rotating electrical machine.

7. Device (50) according to the preceding claim, **characterized in that** the means are also formed, on the one hand, by at least one other slot (57) arranged on the support (51) and capable of receiving the lug (48) of the yoke (5) of the rotating electrical machine, and, on the other hand, by at least one other arrangement of the brush-holder assembly (60) on the support (51) produced in such a way that the geometrical axis of at least one brush (13) is offset angularly by at least one other predetermined value (α2) with respect to the geometrical axis of the said at least one other slot (57), these geometrical axes passing through the axis of rotation (X) of the rotating electrical machine.

8. Device (50) according to one of Claims 6 to 7 and according to Claim 4, **characterized in that** the support (51) and the brush-holder assembly (60) are arranged in such a way that the brush-holder assembly (60) can be arranged substantially on either side of the support (51) in order that, after turning over the support (51) with respect to an axis perpendicular to the axis of rotation (X) of the rotating electrical machine, the commutation angle is adapted to the direction of rotation (H, AH) of the combustion engine.

9. Rotating electrical machine having magnets, in particular a starter for a motor vehicle combustion engine, comprising a brush device (50) according to any one of the preceding claims.

10. Machine according to the preceding claim, **characterized in that** it comprises a yoke (5) provided with at least one lug (48) able to engage in a slot (55, 57) of the brush device (50), in particular in order to block this device (50) in rotation with respect to this yoke (5).

11. Machine according to the preceding claim, **characterized in that** the yoke (5) comprises at least one magnet (4) mounted inside it, this magnet (4) being fixed to the yoke (5) by fixing means in such a way that the geometrical axis of the magnet (4) is offset angularly by a predetermined value with respect to the geometrical axis of the lug (48) of the yoke (5), these geometrical axes passing through the axis of rotation (X) of the machine.

12. Machine according to the preceding claim, **characterized in that** the means for fixing the magnets in the yoke are formed by at least one hole (40) arranged in the yoke and a fixing member (42), in particular a screw, capable of passing through the hole in order to fix the magnet (4) inside the yoke (5).
